# EUROPÄISCHE PATENTANMELDUNG

(11) **EP 3 130 902 A1**
(43) Veröffentlichungstag der Anmeldung: **15.02.2017**
(21) Anmeldenummer: 15180386.3
(22) Anmeldetag: 10.08.2015
(51) Int. Cl.: G01M 13/04

(54) **SYSTEM UND VERFAHREN ZUR UBERWACHUNG DER BELASTUNG VON LAGERN DES ANTRIEBS EINES WASSERFAHRZEUGS SOWIE WASSERFAHRZEUG**

(71) Anmelder: Siemens Aktiengesellschaft, 80333 München (DE)
(72) Erfinder: Jungiewicz, Artur, 13086 Berlin (DE)

(57) **Zusammenfassung**

System und Verfahren zur Überwachung der Belastung von Lagern des Antriebs eines Wasserfahrzeugs sowie Wasserfahrzeug

Die Erfindung betrifft ein System (4) und ein Verfahren zur Überwachung der Belastung von Lagern (6) eines Antriebs (2) eines Wasserfahrzeugs, insbesondere eines Schiffes oder U-Boots. Das System(4) umfasst
- mindestens einen Beschleunigungssensor (18) zur Messung von Beschleunigungen des Antriebs (2) in drei orthogonale Richtungen sowie von drei Winkelbeschleunigungen,
- pro untersuchtes Lager (6) mindestens einen Abstandssensor (20) zur Bestimmung einer relativen Position einer Antriebswelle (10) zu einem Lagergehäuse des jeweiligen Lagers (6),
- eine Auswerteinheit (22) zur Berechnung von auf das jeweilige Lager (6) wirkenden Kräften anhand der Daten des Beschleunigungssensors (18) und des Abstandssensors (20).

Mit Hilfe dieses Systems (4) erfolgt eine zuverlässige Überwachung der Lagerbelastung im Betrieb des Wasserfahrzeugs.

## Beschreibung

System und Verfahren zur Überwachung der Belastung von Lagern des Antriebs eines Wasserfahrzeugs sowie Wasserfahrzeug

Die Erfindung betrifft ein System und ein Verfahren zur Überwachung der Belastung von Lagern eines Antriebs eines Wasserfahrzeugs. Die Erfindung betrifft weiterhin ein Wasserfahrzeug mit einem solchen System.

Antrieben für Wasserfahrzeuge, insbesondere Marineschiffe und U-Boote, werden höchste Anforderungen hinsichtlich der mechanischen Belastung insbesondere bei Seegang oder Manövern gestellt. Dabei wurde der Zustand der Antriebslager bisher nur durch visuelle Inspektionen begutachtet. Dies erfordert jedoch, dass die Lager auseinandergebaut werden, um an die kritischen Komponenten wie Lagerschalen zu gelangen.

Der Erfindung liegt die Aufgabe zugrunde, eine zuverlässige Überwachung der Lagerbelastung im Betrieb eines Wasserfahrzeugs zu gewährleisten.

Die Aufgabe wird erfindungsgemäß gelöst durch ein System zur Überwachung der Belastung von Lagern eines Antriebs eines Wasserfahrzeugs, insbesondere eines Schiffes oder U-Boots, umfassend:
- mindestens einen Beschleunigungssensor zur Messung von Beschleunigungen in drei orthogonale Richtungen sowie von drei Winkelbeschleunigungen des Antriebs,
- pro untersuchtes Lager mindestens einen Abstandssensor zur Bestimmung einer relativen Position einer Antriebswelle zu einem Lagergehäuse des jeweiligen Lagers,
- eine Auswerteinheit zur Berechnung von auf das jeweilige Lager wirkenden Kräften anhand der Daten des Beschleunigungssensors und des Abstandssensors.

Die Aufgabe wird weiterhin erfindungsgemäß gelöst durch ein Verfahren zur Überwachung der Belastung von Lagern eines Antriebs eines Wasserfahrzeugs, insbesondere eines Schiffes oder U-Boots, bei dem
- Daten über Beschleunigungen in drei orthogonale Richtungen sowie über drei Winkelbeschleunigungen mit Hilfe mindestens eines Beschleunigungssensors gesammelt werden,
- pro untersuchtes Lager mit Hilfe mindestens eines Abstandssensors die relative Position einer Antriebswelle zu einem Lagergehäuse des jeweiligen Lagers bestimmt wird, und
- die auf das jeweilige Lager wirkenden Kräfte anhand der Daten des Beschleunigungssensors und des Abstandssensors in einer Auswerteeinheit berechnet werden.

Die Aufgabe wird schließlich durch ein Wasserfahrzeug mit einem solchen System gelöst.

Die in Bezug auf das System nachstehend angeführten Vorteile und bevorzugten Ausgestaltungen lassen sich sinngemäß auf das Verfahren und das Wasserfahrzeug übertragen.

Die erfindungsgemäße Lösung sieht vor, dass mindestens ein Beschleunigungssensor im Inneren des Wasserfahrzeugs installiert wird, über welchen dynamische Änderungen der Lage des Antriebs infolge von Seegang oder Manövern (z.B. beim Tauchvorgang eines U-Boots) registriert werden. Es werden dabei Beschleunigungen in drei translatorische und drei rotatorische Richtungen gemessen, um möglichst ausführliche Informationen über die Beschleunigungen in alle Bewegungsfreiheitsgrade zu erhalten.

Zu diesem Zweck sind in der Auswerteeinheit Daten zumindest über das Gewicht, insbesondere zusätzlich auch über die Geometrie des Antriebs erfasst. Mittels der Beschleunigungen unter Kenntnis des Gewichts des Antriebs bzw. der Antriebskomponenten werden die Massenkräfte insbesondere zwischen dem Rotor und den Lagern berechnet. Die Informationen über die Geometrie sind für die Berechnung der Massenträgheitsmomente des Rotors relevant. Auf diese Weise ist eine dynamische und präzise Berechnung der Lagerkräfte gewährleistet. Insbesondere werden dadurch die Richtung, die Höhe und die Häufigkeit der Lagerkraftänderungen im Betrieb bestimmt.

Parallel dazu wird an den untersuchten Lagern über Abstandssensoren die relative Position der Antriebsachse zum Lagergehäuse erfasst. Hierdurch kann eine Aussage über die Verteilung der Lagerkräfte getroffen werden, d.h. welches Lager mit welcher Kraft zum jeweiligen Zeitpunkt belastet wird.

Beide o.g. Messungen erfolgen insbesondere kontinuierlich im Betrieb des Wasserfahrzeugs. Die gemessenen translatorischen Beschleunigungen und Winkelbeschleunigungen des Antriebs sowie die relativen Position der Antriebsachse werden in die Auswerteeinheit eingespeist, welche, wie oben beschrieben, eine dynamische und präzise Berechnung der Lagerkräfte bzw. einer Lagerkraftänderung über die Zeit durchführt. Informationen, die in der Auswerteeinheit eingespeist oder solche, die mit Hilfe der Auswerteeinheit berechnet werden, werden z.B. einem Benutzer angezeigt, für weitere Datenverarbeitung sofort herangezogen oder gespeichert oder in eine Steuerung des Antriebs eingespeist.

Gemäß einer bevorzugten Ausführung ist ein sechsachsiger Beschleunigungssensor zur Messung der Beschleunigungen des Antriebs vorgesehen. Die Messung der Beschleunigungen in alle Freiheitsgrade erfolgt somit über einen einzigen Sensor, so dass eine besonders platzsparende Ausführung vorliegt.

Vorzugsweise ist der Beschleunigungssensor an einem unbeweglichen Teil des Antriebs, insbesondere an einem Stator angeordnet. Eine Anordnung am Stator oder einem anderen unbeweglichen Teil des Antriebs ist aus konstruktiven Gründen vorteilhaft: der Sensor wird mit elektrischem Strom versorgt und die Sensordaten werden an die Auswerteeinheit übertragen, deshalb ist es von Vorteil den Beschleunigungssensor an einem stationären Teil anzubringen.

Gemäß einer weiteren bevorzugten Ausführung sind pro untersuchtes Lager zwei Wirbelstromsensoren zur Abstandsmessung vorgesehen. Wirbelstromsensoren gehören zur Klasse der berührungslosen Abstandssensoren. Das namensgebende Messprinzip ermöglicht die Bestimmung des Abstands zu leitfähigen Messobjekten. Als Besonderheit dieser Messtechnik nimmt das Vorhandensein von nicht leitfähigen Medien wie Öl, Wasser oder Kühlmittel keinen Einfluss auf das Messergebnis. Aufgrund dieser Eigenschaft sind Wirbelstromsensoren für den Einsatz im rauen industriellen Umfeld besonders geeignet. Zudem eignen sich Wirbelstromsensoren hervorragend zur Beobachtung dynamischer Vorgänge. Sie zeichnen sich durch Robustheit, hohe Dynamik und hohe Auflösung aus. Darüber hinaus können sie über ein breites Temperaturspektrum angewendet werden. Der Einsatz von zwei Wirbelstromsensoren, die in der Regel in einem Winkel von 90° zueinander angeordnet sind, ist erforderlich, um den Abstand zwischen der Antriebswelle und des Lagergehäuses mehrdimensional erfassen zu können.

Vorzugsweise ist die Auswerteeinheit dafür ausgebildet, aufgrund der Daten über die Belastung der Lager eine Lebensdauerabschätzung der Lager herauszugeben. Mittels der gewonnen Informationen über die Lagerkraftänderungen werden insbesondere sogenannte Lastkollektiven aufgestellt, welche mit Abnutzungsdaten des Lagerherstellers verglichen werden, um eine zuverlässige Lebensdauerabschätzung der Lager zu ermöglichen. Mit Lastkollektiv wird hierbei die Gesamtheit aller aufgetretenen Schwingungsamplituden über einen Zeitraum bezeichnet. Schwingende Belastungen treten in der Realität selten einstufig, also mit nur einer einzigen Amplitude auf. Im Regelfall sind es viele unterschiedliche Amplituden ohne feste Reihenfolge. Wenn man diese so genannte Beanspruchungs-ZeitFunktion auswertet, so erhält man eine Beschreibung dieser Funktion in Form der Häufigkeiten der aufgetretenen Lasten. Diese Lastkollektiven werden dann für die Abschätzung der Lebensdauer des jeweiligen Lagers herangezogen.

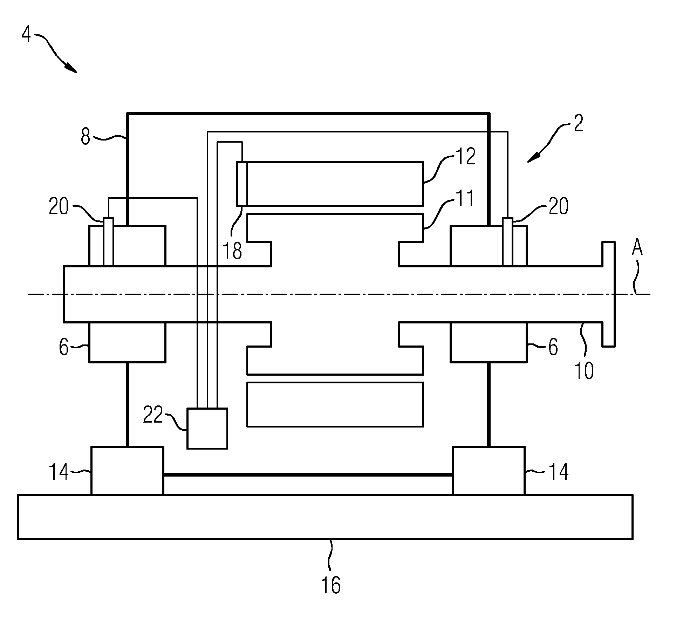

Ein Ausführungsbeispiel der Erfindung wird anhand einer Zeichnung näher erläutert. Hierin zeigt die einzige Figur schamtisch und stark vereinfacht den Antrieb 2 eines nicht näher dargestellten Schiffes oder U-Boots. Dem Antrieb 2 ist ein System 4 zur Überwachung der Belastung von Lagern 6, mit deren Hilfe ein Motorgehäuse 8 auf einer Antriebswelle 10. Die Antriebswelle 10 ist im gezeigten Ausführungsbeispiel als ein Rotor 11 ausgebildet und erstreckt sich entlang einer Wellenachse A. Aus der Figur ist ein Abschnitt der Antriebswelle 10 gezeigt. Die gesamte Antriebswelle umfasst mehrere Rotoren 11, die zu einem s.g. Antriebsstrang zusammengesetzt sind.

Der Antrieb 2 umfasst weiterhin einen innerhalb des Motorgehäuses 8 angeordneten Stator 12. Das Motorgehäuse 8 ist über Aufstellungselemente 14 auf einem Fundament 16 gestützt.

Das System 4 umfasst einen sechsachsigen Beschleunigungssensor 18 zur Messung von Beschleunigungen des Antriebs 2 in drei orthogonale Richtungen sowie von drei Winkelbeschleunigungen. Auf diese Weise werden Informationen über die Beschleunigungen bzw. Kräfte in alle Freiheitsgrade gewonnen. Dabei ist für den gesamten Antriebsstrang nur ein Beschleunigungssensor 18 erforderlich.

Das System 4 umfasst weiterhin pro Lager 6 je zwei Wirbelstromsensoren, die in der Figur als eine Einheit dargestellt und mit dem Bezugszeichen 20 versehen sind. Die Wirbelstromsensoren messen den Abstand zwischen der Antriebswelle 10 und einem nicht näher gezeigten Lagergehäuse der Lager 6. Mit dem Bezugszeichen 20 ist somit im Allgemeinen ein Abstandssensor bezeichnet.

Schließlich umfasst das System 4 auch eine Auswerteeinheit 22, in welche die Messedaten des Beschleunigungssensors 18 und den Wirbelstromsensoren 20 zur Auswertung eingespeist werden. In der Auswerteeinheit 22 werden die Daten über die Beschleunigungen und der relativen Position des Rotors 11 bzw. Antriebswelle 10 zu den Lagerschalen der Lager 6 verarbeitet, um Informationen über die auf die Lager 6 wirkenden Kräfte im Betrieb des Wasserfahrzeugs zu gewinnen. Insbesondere werden die Richtung, die Höhe und die Häufigkeit der Lagerkraftänderungen bestimmt. Diese Daten werden mit Herstellerdaten über die Belastbarkeit der Lager 6 verglichen, damit eine Aussage über die Lebensdauer der Lager treffen zu können, ohne dass dafür eine Demontage der Lager erforderlich ist.

## Patentansprüche

1. System (4) zur Überwachung der Belastung von Lagern (6) eines Antriebs (2) eines Wasserfahrzeugs, insbesondere eines Schiffes oder U-Boots, umfassend:
- mindestens einen Beschleunigungssensor (18) zur Messung von Beschleunigungen in drei orthogonale Richtungen sowie von drei Winkelbeschleunigungen des Antriebs (2),
- pro untersuchtes Lager (6) mindestens einen Abstandssensor (20) zur Bestimmung einer relativen Position einer Antriebswelle (10) zu einem Lagergehäuse des jeweiligen Lagers (6),
- eine Auswerteinheit (22) zur Berechnung von auf das jeweilige Lager (6) wirkenden Kräften anhand der Daten des Beschleunigungssensors (18) und des Abstandssensors (20).

2. System (4) nach Anspruch 1, wobei ein sechsachsiger Beschleunigungssensor (18) zur Messung der Beschleunigungen des Antriebs (2) vorgesehen ist.

3. System (4) nach Anspruch 2, wobei der Beschleunigungssensor (18) an einem unbeweglichen Teil des Antriebs (2), insbesondere an einem Stator (12) angeordnet ist.

4. System (4) nach einem der vorhergehenden Ansprüche, wobei pro untersuchtes Lager (6) zwei Wirbelstromsensoren zur Abstandsmessung vorgesehen sind.

5. System (4) nach einem der vorhergehenden Ansprüche, wobei die Auswerteeinheit (22) dafür ausgebildet ist, aufgrund der Daten über die Belastung der Lager (6) eine Lebensdauerabschätzung der Lager (6) herauszugeben.

6. Verfahren zur Überwachung der Belastung von Lagern (6) eines Antriebs (2) eines Wasserfahrzeugs, insbesondere eines Schiffes oder U-Boots, bei dem
- Daten über Beschleunigungen in drei orthogonale Richtungen sowie über drei Winkelbeschleunigungen des Antriebs (2) mit Hilfe mindestens eines Beschleunigungssensors (18) gesammelt werden,
- pro untersuchtes Lager (6) mit Hilfe mindestens eines Abstandssensors (20) die relative Position einer Antriebswelle (10) zu einem Lagergehäuse des jeweiligen Lagers (6) bestimmt wird, und
- die auf das jeweilige Lager (6) wirkenden Kräfte anhand der Daten des Beschleunigungssensors (18) und des Abstandssensors (20) in einer Auswerteeinheit (22) berechnet werden.

7. Verfahren nach Anspruch 6, wobei die Daten über die Beschleunigungen mittels eines sechsachsigen Beschleunigungssensors (18) gesammelt werden.

8. Verfahren nach Anspruch 7, wobei der Beschleunigungssensor (18) an einem unbeweglichen Teil des Antriebs (2), insbesondere an einem Stator (12) die Daten über die Beschleunigungen erfasst.

9. Verfahren nach einem der Ansprüche 6 bis 8, wobei pro untersuchtes Lager (6) zwei Wirbelstromsensoren zur Abstandsmessung eingesetzt werden.

10. Verfahren nach einem der Ansprüche 6 bis 9, wobei aufgrund der Daten über die Belastung der Lager (6) mittels der Auswerteeinheit (22) eine Lebensdauerabschätzung der Lager (6) erfolgt.

11. Wasserfahrzeug mit einem System (4) nach einem der Ansprüche 1 bis 5.
